# FASCICULE DE BREVET EUROPEEN

(11) **EP 2 750 938 B1**
(45) Date de publication et mention de la délivrance du brevet: **31.12.2014**
(21) Numéro de dépôt: 12750343.1
(22) Date de dépôt: 01.08.2012
(51) Int. Cl.: B60R 25/02

(54) **DISPOSITIF ANTIVOL POUR COLONNE DE DIRECTION ET COLONNE DE DIRECTION ASSOCIÉE**
DIEBSTAHLSCHUTZEINRICHTUNG FÜR EINE LENKSÄULE UND ZUGEHÖRIGE LENKSÄULE
ANTI-THEFT DEVICE FOR STEERING COLUMN AND RELATED STEERING COLUMN

(30) Priorité: 30.08.2011 FR 1102633
(43) Date de publication de la demande: 09.07.2014
(73) Titulaire: U-Shin France SAS, 94046 Créteil Cedex (FR)
(72) Inventeur: PERRIN, Christophe, F-58160 Imphy (FR); LESUEUR, Guillaume, F-58000 Nevers (FR); DELLA FIORENTINA, Alix, F-58000 Nevers (FR)
(74) Mandataire: Larger, Solène
(86) Numéro de dépôt international: PCT/EP2012/065080
(87) Numéro de publication internationale: WO 2013/029907

(56) Documents cités:
- EP-A1- 0 669 234
- FR-A1- 2 909 953

## Description

La présente invention est relative à un dispositif antivol pour colonne de direction. L'invention trouve une application particulièrement avantageuse dans le domaine automobile.

Elle concerne plus particulièrement un antivol de véhicule faisant intervenir un organe de verrouillage ou pêne de verrouillage de la colonne de direction d'un véhicule lors du retrait de la clé de contact. À cet effet, le pêne est monté mobile dans le dispositif antivol entre une position de verrouillage de la colonne et une position de libération de la colonne.

De tels antivols comprennent généralement un verrou avec un stator et un rotor actionné par une clé codée et commandant notamment au cours de sa rotation le mouvement du pêne.

Plus précisément, la commande du pêne peut s'effectuer par une tirette reliée à une came elle-même solidaire du rotor du verrou, ladite came ayant pour fonction de transformer le mouvement de rotation du rotor en un mouvement de translation de la tirette et du pêne associés.

Le verrou permet donc, via la tirette, de déverrouiller le pêne de la position où il bloque en rotation la colonne de direction.

Par un geste de malveillance, une personne pourrait désolidariser le verrou du dispositif antivol afin d'accéder à la tirette. En ayant accès à cette tirette, la personne malveillante pourrait déplacer le pêne de sa position de verrouillage où il bloque la colonne de direction vers une position de libération dans laquelle le pêne libère la colonne de direction.

Pour limiter cet inconvénient, il a été proposé dans le document FR 2 909 953 au nom de la Demanderesse des moyens de blocage du pêne de verrouillage. Ces moyens de blocage comprennent un élément déclencheur solidaire du verrou, et un élément de blocage, qui lorsque l'élément déclencheur est actionné par la rupture du corps d'antivol ou l'arrachage du rotor, se déplace dans une position où il peut bloquer le pêne en translation sous l'action d'un ressort.

Cependant, dans le cas d'une tentative d'effraction sans rupture du corps d'antivol ou d'arrachage du rotor, de tels moyens de blocage ne se déclenchent pas. On parle notamment d'effraction douce qui peut se faire par exemple en réalisant un perçage pour accéder à la tirette.

L'invention a pour objectif de proposer une sécurité supplémentaire de la colonne de direction en cas de tentative d'effraction dite douce, ne provoquant pas la rupture du corps d'antivol ou l'arrachage du rotor. Un dispositif antivol pour colonne de direction de véhicule automobile selon l'invention est défini dans la revendication 1 et une colonne de direction de véhicule automobile selon l'invention est défini dans la revendication 13.

Un tel dispositif antivol permet d'augmenter la sécurité en cas de vol ou de tentative d'effraction par exemple en cas de crochetage de la tirette.

Ledit dispositif peut en outre comporter une ou plusieurs caractéristiques suivantes, prises séparément ou en combinaison :
- ledit au moins un moyen de blocage dudit pêne comprend un élément déclencheur solidarisé au stator dudit verrou, un élément de blocage relié audit élément déclencheur et un moyen de rappel configuré pour solliciter ledit élément de blocage vers une position active de blocage dudit pêne lorsque ledit élément déclencheur est activé, et ledit élément déclencheur forme écran de protection de ladite tirette ;
- ledit élément déclencheur s'étend au moins partiellement autour de ladite tirette ;
- ledit élément déclencheur est réalisé sous la forme d'une tige de déclenchement reliée d'une part au stator et d'autre part audit élément de blocage, et ladite tige présentant une saillie de protection qui s'étend au moins partiellement autour de ladite tirette ;
- ladite saillie de protection présente une section transversale sensiblement en « L »;
- ledit élément de blocage présente au moins un moyen de guidage coopérant avec ledit élément déclencheur, de sorte que ledit moyen de guidage est configuré pour guider ledit élément déclencheur entre :
   - une première position dans laquelle ledit élément déclencheur engage ledit élément de blocage pour le maintenir en position de repos, et
   - une deuxième position dans laquelle ledit élément déclencheur libère ledit élément de blocage qui est sollicité par ledit moyen de rappel dudit moyen de blocage, vers la position active de blocage dudit pêne ;
- ledit dispositif antivol comporte en outre un moyen supplémentaire de blocage en translation dudit pêne commandé par ledit moyen de commande) entre une position active dans laquelle ledit moyen supplémentaire de blocage bloque ledit pêne en translation de manière à maintenir ledit pêne en position de verrouillage lorsque ledit verrou est en position neutre, et une position de repos dans laquelle ledit moyen supplémentaire de blocage libère ledit pêne lorsque ledit verrou est en position de fonctionnement ;
- ledit moyen supplémentaire de blocage comprend un levier pivotant présentant une première extrémité en contact avec ledit moyen de commande et une deuxième extrémité opposée configurée pour s'opposer au déplacement dudit pêne ;
- ladite tirette présente un évidement dans lequel ledit levier est monté mobile ;
- ledit élément déclencheur s'étend au moins partiellement autour dudit levier ;
- ledit moyen supplémentaire de blocage comporte un moyen de rappel en position active, et ledit moyen de rappel est interposé entre ledit levier et ledit élément déclencheur s'étendant au moins partiellement autour dudit levier ;
- ledit moyen de rappel est interposé entre ledit levier et ladite saillie de protection.

L'invention concerne aussi une colonne de direction de véhicule automobile comprenant un dispositif antivol tel que défini ci-dessus.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente schématiquement une coupe d'un corps d'antivol d'un dispositif antivol selon l'invention,
- la figure 2 montre schématiquement en perspective un moyen de blocage anti-recul d'un pêne du dispositif antivol interposé entre le pêne et un moyen de commande de déplacement du pêne,
- la figure 3a est une vue en perspective représentant plus en détail le moyen de commande en déplacement du pêne et un moyen de blocage anti-recul du pêne,
- la figure 3b est une autre vue en perspective représentant le moyen de commande en déplacement du pêne, le moyen de blocage anti-recul et un moyen de super-condamnation du pêne,
- la figure 3c est encore une autre vue en perspective de la figure 3b,
- la figure 4 est une vue partielle représentant de façon schématique le moyen de blocage anti-recul en position active pour bloquer le pêne en translation,
- la figure 5 est une vue de côté schématique du moyen de blocage anti-recul en position active entre le pêne et le moyen de commande,
- la figure 6 est une vue partielle représentant de façon schématique le moyen de blocage anti-recul en position de repos, et
- la figure 7 est une vue de côté schématique du moyen de blocage anti-recul en position de repos entre le pêne et le moyen de commande, libérant la trajectoire du pêne.

Dans ces figures, les éléments sensiblement identiques portent les mêmes références.

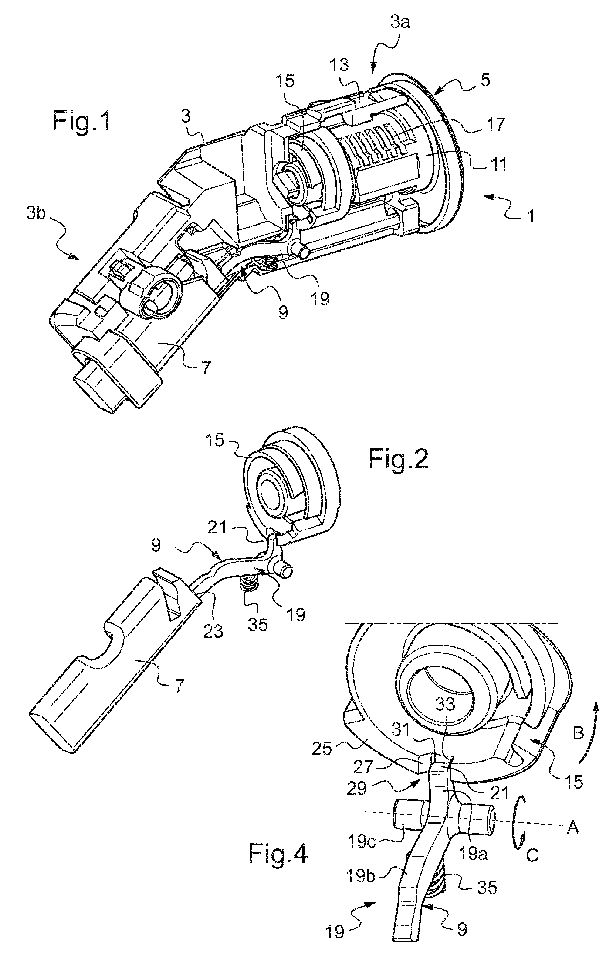

On a représenté sur la figure 1, un dispositif antivol pour véhicule automobile, selon l'invention, désigné par la référence générale 1. Ce dispositif antivol 1 est destiné à commander le démarrage d'un moteur du véhicule et le verrouillage d'une colonne de direction du véhicule (non représentée).

Le dispositif antivol 1 présente un corps d'antivol 3.

Ce corps d'antivol 3 comprend un verrou 5, un pêne 7 de verrouillage de la colonne de direction (non représentée).

Dans l'exemple illustré sur la figure 1, le corps d'antivol 3 présente une première partie avant 3a logeant le verrou 5 et une deuxième partie arrière 3b logeant le pêne 7.

Les termes « avant » et « arrière » sont ici utilisés par rapport à l'accessibilité à un utilisateur. L'utilisateur a accès à la partie avant 3a du corps antivol 3 pour insérer sa clé de contact. La partie arrière 3b du corps d'antivol 3 est quant à elle à proximité de la colonne de direction.

Les deux parties avant 3a et arrière 3b sont sensiblement inclinées l'une par rapport à l'autre.

Le verrou 5 comprend un rotor (non visible sur les figures) monté rotatif dans un stator 13.

Selon le mode de réalisation illustré, le verrou 5 présente en outre une came 15 solidarisée au rotor, par exemple agencée en bout de rotor.

La came 15 présente un corps de forme générale cylindrique coaxiale au rotor.

Le rotor entraîne donc en rotation cette came 15.

Le verrou 5 comprend également les éléments classiques tels que des paillettes 17 permettant de lier en rotation le stator 13 et le rotor lorsque la clé de contact n'est pas introduite dans le rotor, et permettant que le stator 13 et le rotor soient libres en rotation l'un par rapport à l'autre lorsque la clé est insérée dans le rotor. Les paillettes 17 servent alors à immobiliser la clé dans le rotor en s'insérant dans les encoches complémentaires de la clé. Lorsque l'utilisateur tourne la clé de contact, cette clé entraîne le rotor du verrou 5 en rotation.

Ainsi, le verrou 5 est mobile entre une position neutre et au moins une position de fonctionnement.

Lorsque l'utilisateur tourne la clé de contact dans le rotor, le verrou est en position de fonctionnement de façon à commander par exemple les accessoires du véhicule ou le démarrage. On peut prévoir des positions angulaires différentes du rotor pour la commande des accessoires et du démarrage.

En position neutre, la clé n'est pas introduite dans le rotor ou la clé est insérée mais n'est pas tournée vers une des positions angulaires de fonctionnement.

Le pêne 7 est monté coulissant dans le corps d'antivol 3. À cet effet, le corps d'antivol 3 peut présenter au niveau de sa partie arrière 3b un guide pêne pour le coulissement du pêne 7.

Le pêne 7 est mobile entre une position de verrouillage de la colonne de direction (non représentée) et une position de libération de cette colonne.

Dans la position de verrouillage, le pêne 7 engage de manière classique une partie de la colonne de direction (non représentée) pour la bloquer en rotation. Dans cette position de verrouillage, le pêne 7 fait généralement saillie par rapport au corps d'antivol 3.

Par contre en position de libération, le pêne 7 est escamoté à l'intérieur du corps d'antivol 3 pour libérer la colonne.

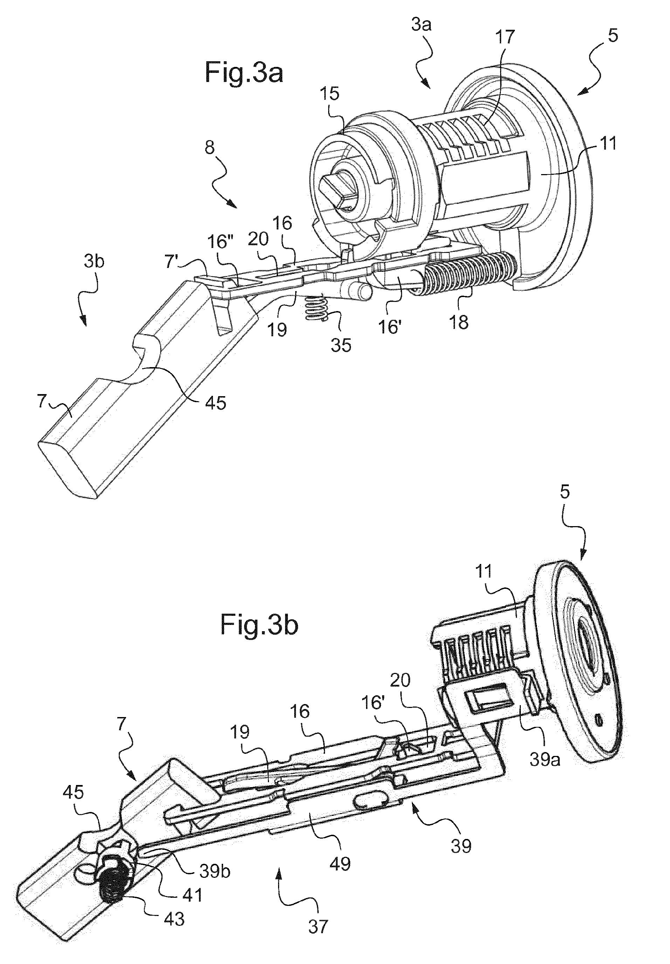

Le verrou 5 comprend donc un moyen de commande 8 (cf figures 3a à 3c) du déplacement du pêne 7 de verrouillage entre les positions de verrouillage et de libération de la colonne de direction (non représentée). Le moyen de commande 8 commande le déplacement du pêne 7 en position de verrouillage lorsque le verrou 5 est en position neutre. En position de fonctionnement du verrou 5, le pêne 7 reste en position de libération de la colonne.

À cet effet, le moyen de commande 8 comprend une tirette 16.

Le moyen de commande 8 peut comprendre en outre un moyen de rappel, tel qu'un ressort 18.

Généralement, c'est le rotor ou la came 15 qui commande le déplacement de la tirette 16 et donc du pêne 7 lorsque l'utilisateur tourne la clé de contact dans le rotor du verrou 5.

La tirette 16 est reliée d'une part à la came 15 et d'autre part au pêne 7.

Plus précisément, comme on le remarque sur les figures 3a,3b, la tirette 16 présente un doigt basculant de guidage 16' qui coopère avec la came 15. En effet, lorsque la came 15 tourne, le doigt de guidage 16' suit une pente de guidage complémentaire de la came 15 et la tirette 16 est entraînée en translation. Selon l'exemple illustré, lorsque la clé tourne le rotor, la tirette 16 est entraînée en translation vers la partie avant 3a du corps d'antivol 3.

D'autre part, la tirette 16 présente une ouverture 16" dans laquelle vient s'insérer une patte de liaison 7' complémentaire du pêne 7. On assure ainsi la liaison entre la tirette 16 et le pêne 7.

Lorsque le verrou 5 est en position neutre, le ressort de rappel 18 sollicite le pêne 7 vers la position de verrouillage de la colonne.

Le moyen de commande 8 du déplacement du pêne 7 comprend donc aussi bien un organe de commande en rotation tel que le rotor ou la came 15, qu'un organe de commande en translation tel que la tirette 16.

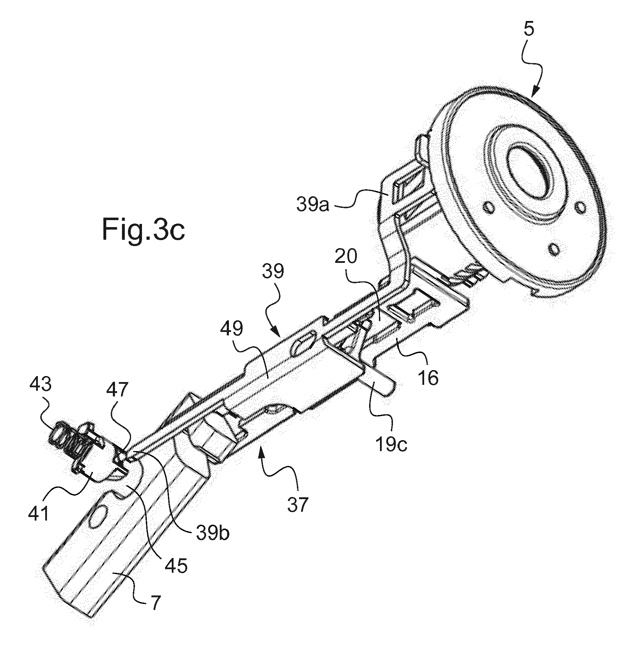

Par ailleurs, le dispositif antivol comporte en outre un moyen de blocage du pêne, tel qu'un moyen de super-condamnation 37 (cf figures 3b et 3c).

Un tel moyen de super-condamnation 37 est généralement activé en cas de rupture du corps d'antivol 3 ou d'arrachage du rotor du verrou 5.

Ce moyen de super-condamnation 37 permet alors de renforcer la sécurité en cas de tentative d'effraction en force avec rupture du corps d'antivol ou arrachage du rotor.

À titre d'exemple, le moyen supplémentaire 37 peut comporter un élément déclencheur 39 solidaire du stator 13 par une première extrémité 39a et un élément de blocage 41, tel qu'un pion de blocage 41, relié à une deuxième extrémité opposée 39b du déclencheur 39.

Le moyen de super-condamnation 37 comporte en outre un moyen de rappel, tel qu'un ressort de compression 43, qui sollicite le pion 41 vers une position active de blocage du pêne 7, dans laquelle le pion 41 engage une encoche associée 45 prévue sur le pêne 7.

L'élément déclencheur 39 est maintenu par le stator, dans une position de maintien du pion de blocage 41 hors de l'encoche 45 du pêne 7.

En cas de tentative d'effraction, dite forte, avec rupture du corps d'antivol 3 ou d'arrachage du rotor, le pion 41 vient engager l'encoche 45 du pêne 7, sous l'action du ressort 43, pour empêcher tout déplacement du pêne 7.

La super-condamnation est donc mise en oeuvre par le déplacement de l'élément déclencheur 39.

À cet effet, le pion 41 peut présenter un moyen de guidage, tel qu'une pente de guidage 47 (mieux visible sur la figure 3c), coopérant avec la deuxième extrémité 39b de l'élément déclencheur 39.

Bien entendu, on peut prévoir en variante un cran de guidage.

Ainsi, cette deuxième extrémité 39b coulisse sur la pente 47 entre :
- une première position dans laquelle l'élément déclencheur 39 engage le pion 41 pour le retenir en position de repos, éloigné de l'encoche 45 du pêne, et
- une deuxième position dans laquelle l'élément déclencheur 39 libère le pion 41. Le pion 41 sollicité par le ressort 43 se place alors en position de super-condamnation de blocage du pêne 7 en engageant l'encoche 45.

En outre, afin de protéger la tirette 16 d'agressions extérieures, dites douces, par exemple par perçage ou encore par sciage, afin de crocheter la tirette 16, le dispositif antivol comporte un dispositif de protection de la tirette 16.

À cet effet, le dispositif de protection de ladite tirette 16 enveloppe au moins partiellement ou alors entièrement la tirette 16, et est configuré pour déclencher un moyen de blocage du pêne 7, par exemple le moyen de super-condamnation 37, en cas d'actionnement du dispositif de protection.

Plus précisément, lorsque le dispositif de protection subit une légère déformation due à une tentative de crochetage de la tirette 16, la personne mal intentionnée va heurter le dispositif de protection l'empêchant d'atteindre la tirette 16 et en outre le moyen de blocage sera actionné pour bloquer le pêne 7. Ainsi, même en continuant par exemple de percer jusqu'à atteindre la tirette 16, le pêne 7 restera immobilisé.

À cet effet, le dispositif de protection peut comprendre un organe de forme générale sensiblement cylindrique qui entoure au moins partiellement la tirette 16. Cet organe peut être un élément déjà présent de l'antivol adapté pour entourer au moins en partie la tirette 16, ou un élément rapporté.

Selon le mode de réalisation représenté sur les figures, c'est le moyen de blocage dit de super-condamnation 37 qui forme écran de protection de la tirette 16.

En effet, l'élément déclencheur 39 comporte une partie qui s'étend au moins partiellement autour de la tirette 16 de façon à envelopper cette tirette 16.

Plus précisément, selon l'exemple illustré, l'élément déclencheur 39 est réalisé sous la forme d'une tige de déclenchement qui s'étend entre le stator 13 et le pion de blocage 41, et qui présente une saillie 49 formant protection autour de la tirette 16.

On peut prévoir d'envelopper toute la tirette 16 pour la protéger ou seulement une partie de la tirette 16 comme dans l'exemple illustré.

Selon le mode de réalisation illustré, la saillie 49 de protection s'étend en-dessous et sur le côté de la tirette 16 par rapport aux figures.

Selon cet exemple, la saillie 49 présente par exemple une section transversale sensiblement en « L » avec une branche qui s'étend en-dessous de la tirette 16 de façon parallèle à la tirette, et l'autre branche qui s'étend en vis-à-vis de la face latérale de la tirette 16.

Un tel agencement où seul un côté est protégé peut être mis en oeuvre lorsque l'autre côté est par exemple moins accessible depuis l'extérieur, ou par exemple parce qu'il est déjà protégé par un système interne du véhicule, tel que le système de commande sous-volant comportant classiquement des commodos.

Ainsi, lors d'une tentative d'effraction, dite douce, par exemple par perçage, l'outil de perçage touchera l'élément déclencheur 39 et la super-condamnation sera déclenchée pour empêcher tout déplacement du pêne 7.

En effet, lorsque l'outil touche l'élément déclencheur 39, ce dernier a tendance à se plier, de sorte que sa deuxième extrémité 39b se lève en référence aux figures représentées, et coulisse sur la pente de guidage 47 jusqu'à libérer le pion de guidage 41. Le pion 41 peut alors engager l'encoche 45 du pêne pour la super-condamnation.

Par ailleurs, le dispositif antivol peut encore comprendre un moyen supplémentaire de blocage 9, pour bloquer en translation le pêne 7. Selon le mode de réalisation décrit, ce moyen de blocage 9 est un moyen anti-recul du pêne 7.

Selon le mode de réalisation décrit, ce moyen supplémentaire de blocage 9 est également commandé par le moyen de commande 8, par exemple par la came 15.

La commande du moyen de blocage 9 anti-recul par le moyen de commande 8, telle que la came solidaire au rotor du verrou, assure une plus grande fiabilité du dispositif. En effet, ce moyen de blocage 9 est systématiquement activé lorsque le verrou est en position neutre et que la clé de contact est retirée du verrou.

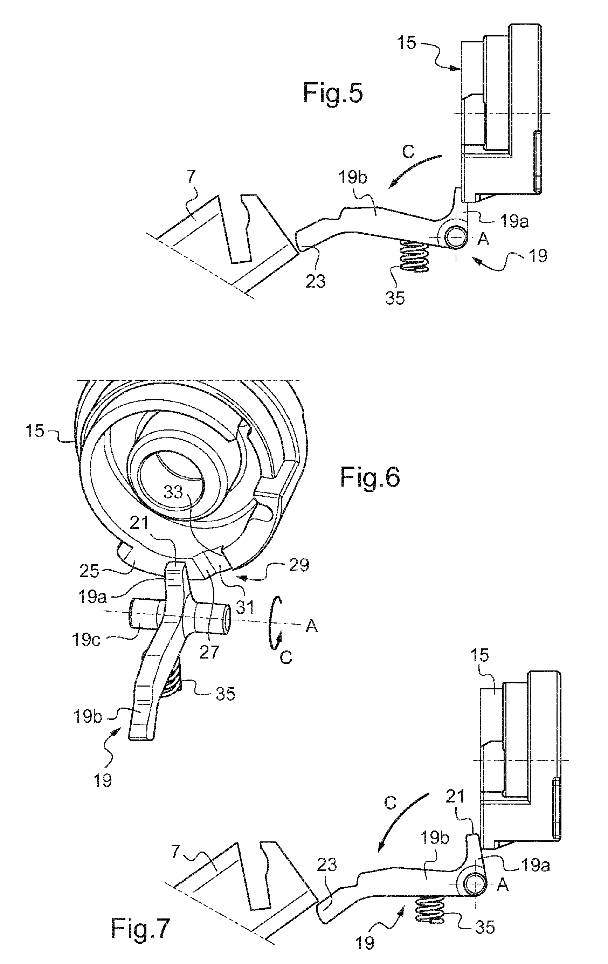

Ce moyen de blocage 9 anti-recul est mobile entre une position active, visible sur les figures 4 et 5, et une position de repos visible sur les figures 6 et 7.

Dans la position active (figures 4 et 5) le moyen de blocage 9 anti-recul bloque le pêne 7 et l'empêche de reculer pour venir en position de libération de la colonne. Le pêne 7 reste donc en position de verrouillage de la colonne.

Ce blocage en translation du pêne 7 peut se faire par le moyen de blocage 9 anti-recul soit en agissant directement sur le pêne 7, comme dans le mode de réalisation illustré, soit de manière indirecte en agissant sur un organe de commande du moyen de commande 8 du déplacement du pêne 7, comme par exemple la tirette 16.

Au contraire, dans la position de repos du moyen de blocage 9 anti-recul (figures 6 et 7), ce dernier libère le pêne 7 qui peut sans obstacle libérer la colonne.

Lorsque le verrou 5 est en position neutre, le moyen de blocage 9 anti-recul se place en position active dans laquelle le moyen de blocage 9 bloque le pêne 7 dans sa position de verrouillage de la colonne (non représentée).

En position de fonctionnement du verrou 5, le moyen de blocage 9 reste en positon de repos.

Le moyen de blocage 9 anti-recul est par exemple interposé entre le verrou 5 et le pêne 7 de verrouillage. Plus précisément, le moyen de blocage 9 anti-recul peut être interposé entre le moyen de commande du déplacement du pêne 7 et le pêne 7.

Selon le mode de réalisation illustré, le moyen de blocage 9 anti-recul est interposé entre la came 15 et le pêne 7.

En alternative, on peut prévoir que le moyen de blocage 9 anti-recul soit entre la came 15 et la tirette par exemple, pour un blocage indirect du pêne 7 via la tirette.

Ce moyen de blocage 9 peut être reçu au moins en partie dans la tirette 16. Dans ce cas, le dispositif de protection, tel que l'élément déclencheur 39 du moyen de super-condamnation 37 protège également ce moyen de blocage 9 anti-recul.

En se référant aux figures 2 et 4, le moyen de blocage 9 anti-recul peut présenter un levier 19 monté pivotant autour d'un axe de pivotement A.

En se référant à nouveau aux figures 3a à 3c, le levier 19 est par exemple monté mobile dans un évidement complémentaire 20 de la tirette 16.

Ce levier 19 est mobile entre la position active, visible sur les figures 4 et 5, et la position de repos visible sur les figures 6 et 7.

Dans la position active (figures 4 et 5) le levier 19 forme un obstacle dans la trajectoire du pêne 7 et empêche le pêne 7 de reculer pour venir en position de libération de la colonne. Le pêne 7 reste en position de verrouillage de la colonne.

Au contraire, dans la position de repos (figures 6 et 7), le levier 19 libère la trajectoire du pêne 7 qui peut sans obstacle libérer la colonne.

À titre d'exemple, le levier 19 présente une première branche 19a et une deuxième branche 19b sensiblement inclinées l'une par rapport à l'autre. Ce levier 19 est par exemple sensiblement en « L » ou présente une forme sensiblement coudée.

Cette forme du levier 19 est adaptée à la forme du corps d'antivol 3 en deux parties 3a,3b.

Le levier 19 présente une première extrémité 21 et une deuxième extrémité opposée 23.

Dans l'exemple illustré, la première extrémité 21 termine la première branche 19a du levier 19, et la deuxième extrémité 23 termine la deuxième branche 19b du levier 19.

Les deux branches 19a,19b sont jointes au niveau de l'axe de pivotement A du levier 19.

Selon l'exemple représenté sur les figures, le levier 19 comporte en outre un pivot 19c à la jonction entre les deux branches 19a,19b.

Selon le mode de réalisation illustré, la première extrémité 21 du levier 19 est en contact avec la came 15.

Plus précisément, la came 15 présente une surface de came 25 et une rampe de guidage 27 de la première extrémité 21 du levier 19 pour entraîner le pivotement du levier 19 entre les positions active (figures 4,5) et de repos (figures 6,7), lorsque la came 15 est actionnée.

Selon le mode de réalisation illustré sur les figures 4 et 6, la came 15 présente une cavité 29 sur la surface de came 25. Cette cavité 29 est délimitée par une première face sensiblement en pente formant la rampe 27 de guidage, une deuxième face 31 radiale délimitant le fond de la cavité 29, et une troisième face 33 axiale opposée à la première face formant rampe 27.

La cavité 29 est prévue pour recevoir la première extrémité 21 du levier 19 en position active (cf figures 4 et 5). La première extrémité 21 est alors dans le fond de la cavité 29.

Ainsi, lorsque le rotor entraîne en rotation la came 15 selon la flèche B, la première extrémité 21 suit la rampe 27 jusqu'à se positionner sur la surface 25 surélevée par rapport à la cavité 29, comme l'illustre la figure 6. La première extrémité 21 du levier se place donc en haut de la rampe 27 de la cavité 29.

Le levier 19 est alors en position de repos.

En ce qui concerne la deuxième extrémité 23, elle est disposée du côté du pêne 7 de verrouillage de la colonne de direction.

Comme l'illustre la figure 5, en position active du levier 19, la deuxième extrémité 23 est disposée en regard de l'extrémité du pêne 7 qui est lui en position de verrouillage. Cette deuxième extrémité 23 est disposée dans la trajectoire du pêne 7.

Ainsi, dans le cas d'une tentative d'effraction si une personne mal intentionnée tente de déplacer le pêne 7 vers la position de libération de la colonne de direction, le levier 19 empêche au pêne 7 de reculer vers cette position de libération.

Lorsque la clé de contact est insérée dans le rotor et l'entraîne en rotation, la came 15 est entraînée en rotation, et du fait de la rampe 27 que suit la première extrémité 21 du levier 19, le levier 19 est entraîné en pivotement autour de l'axe A selon la flèche C. La deuxième extrémité 23 du levier 19 libère la trajectoire du pêne 7. Le pêne 7 peut alors libérer la colonne de direction.

Par ailleurs, le moyen de blocage 9 anti-recul comprend un moyen de rappel en position active.

On peut citer comme exemple de moyen de rappel un ressort de compression 35. Le ressort de compression 35 est placé dans l'exemple illustré sur la figure 1 entre le levier 19 et le corps d'antivol 3. Plus précisément, le ressort de compression 35 est disposé au niveau de la deuxième branche 19b du levier 19.

Ce ressort de compression 35 exerce un effort sur le levier sensiblement dirigé vers le haut en référence aux figures, pour rappeler le levier 19 en position active.

Ainsi, lorsque l'utilisateur retire la clé de contact du rotor, le verrou 5 passe en position neutre, le pêne 7 est amené en position de verrouillage de la colonne de direction, et sous l'effet du ressort 35 le levier 19 est en position active (figures 4,5) dans laquelle il empêche le recul du pêne 7 vers la position de libération.

Si par exemple par crochetage de la tirette 16, une personne mal intentionnée tente d'actionner le pêne 7 vers la position de libération de la colonne, la deuxième extrémité 23 du levier forme un obstacle anti-recul pour le pêne 7. La première extrémité 21 du levier 19 étant logée dans la cavité 29 du moyen de commande qui est fixe, le levier 19 est bloqué et la deuxième extrémité 23 reste dans la trajectoire du pêne 7.

Lorsque l'utilisateur insère et tourne la clé de contact dans le rotor, le verrou 5 passe de la position neutre à une position de fonctionnement, le moyen de commande comme par exemple la came 15 est actionnée, et la première extrémité 21 du levier 19 suit la rampe de guidage 29 ce qui entraîne le pivotement du levier 19 vers la position de repos et la deuxième extrémité 23 du levier 19 libère la trajectoire du pêne 7 (figures 6,7).

Le pêne 7 est amené en position de libération de la colonne de direction.

Le moyen de blocage est donc amené en position de repos avant le recul du pêne 7 vers la position de libération de la colonne. Cette synchronisation est obtenue grâce à la commande par la came 15.

Comme dit précédemment, l'élément déclencheur 39 du moyen de super-condamnation peut également former écran de protection d'un tel levier 19.

En particulier, selon le mode de réalisation illustré sur les figures 3b et 3c, l'élément déclencheur 39 s'étend au moins partiellement autour du levier pivotant 19 reçu dans la tirette 16.

Selon le mode de réalisation illustré, la saillie 49 de protection s'étend en-dessous et sur le côté du levier 19 par rapport aux figures.

Plus précisément, le levier 19 étant monté mobile dans l'évidement 20 de la tirette 16, la saillie 49 s'étend en dessous de la tirette 16 et du levier 19, et sur le côté de la tirette 16, par rapport aux figures illustrées.

Par ailleurs, dans ce cas où la saillie 49 s'étend en-dessous de la tirette 16 et du levier 19, le ressort 35 du moyen de blocage (non visible sur les figures 3b et 3c) s'étend entre le levier 19 et cette saillie 49 de protection. Le dispositif de protection permet donc une protection supplémentaire, en protégeant la tirette 16 et éventuellement le levier 19 pivotant du moyen de blocage 9 anti-recul du pêne 7.

De plus, même en continuant le perçage par exemple de façon à détruire le levier 19, la super-condamnation est activée et le pêne 7 reste bloqué en translation.

Ainsi, lors d'une tentative d'effraction, dite douce, par exemple par perçage, pour tenter de désactiver le moyen de blocage 9 anti-recul du pêne 7, l'outil de perçage touchera l'élément déclencheur 39 et la super-condamnation sera déclenchée pour empêcher tout déplacement du pêne 7.

## Revendications

1. Dispositif antivol pour colonne de direction de véhicule automobile, ledit dispositif comportant :
- un pêne (7) monté mobile en translation dans ledit dispositif entre une position de verrouillage de la colonne de direction et une position de libération de ladite colonne, et
- un verrou (5) mobile entre une position neutre et une position de fonctionnement, et comprenant un rotor et un moyen de commande (8) de déplacement dudit pêne (7) comportant :
• une came (15) solidarisée audit rotor pour commander le déplacement dudit pêne (7), et
• une tirette (16) commandée en déplacement par ladite came (15),
ledit dispositif antivol comporte en outre un dispositif de protection de ladite tirette (16) s'étendant au moins partiellement autour de ladite tirette (16) et au moins un moyen de blocage (37) dudit pêne (7), **caractérisé en ce que** ledit dispositif de protection est configuré pour déclencher ledit au moins un moyen de blocage (37) en cas d'actionnement dudit dispositif de protection lorsque ledit dispositif de protection subit une déformation.

2. Dispositif antivol selon la revendication 1, **caractérisé en ce que** ledit au moins un moyen de blocage (37) dudit pêne (7) comprend un élément déclencheur (39) solidarisé au stator (13) dudit verrou (5), un élément de blocage (41) relié audit élément déclencheur (39) et un moyen de rappel (43) configuré pour solliciter ledit élément de blocage (41) vers une position active de blocage dudit pêne (7) lorsque ledit élément déclencheur (39) est activé, et **en ce que** ledit élément déclencheur (39) forme écran de protection de ladite tirette (16).

3. Dispositif antivol selon la revendication 2, **caractérisé en ce que** ledit élément déclencheur (39) s'étend au moins partiellement autour de ladite tirette (16).

4. Dispositif antivol selon l'une des revendications 2 ou 3, **caractérisé en ce que** ledit élément déclencheur (39) est réalisé sous la forme d'une tige de déclenchement reliée d'une part au stator (13) et d'autre part audit élément de blocage (41), et ladite tige présentant une saillie de protection (49) qui s'étend au moins partiellement autour de ladite tirette (16).

5. Dispositif antivol selon la revendication 4, **caractérisé en ce que** ladite saillie de protection (49) présente une section transversale sensiblement en « L ».

6. Dispositif antivol selon l'une des revendications 4 ou 5, **caractérisé en ce que** ledit élément de blocage (41) présente au moins un moyen de guidage (47) coopérant avec ledit élément déclencheur (39), de sorte que ledit moyen de guidage (47) est configuré pour guider ledit élément déclencheur (39) entre :
- une première position dans laquelle ledit élément déclencheur (39) engage ledit élément de blocage (41) pour le maintenir en position de repos, et
- une deuxième position dans laquelle ledit élément déclencheur (39) libère ledit élément de blocage (41) qui est sollicité par ledit moyen de rappel (43) dudit moyen de blocage (37), vers la position active de blocage dudit pêne (7).

7. Dispositif antivol selon l'une quelconque des revendications précédentes, **caractérisé en ce qu'**il comporte en outre un moyen supplémentaire de blocage (9) en translation dudit pêne (7) commandé par ledit moyen de commande (8) entre une position active dans laquelle ledit moyen supplémentaire de blocage (9) bloque ledit pêne (7) en translation de manière à maintenir ledit pêne (7) en position de verrouillage lorsque ledit verrou (5) est en position neutre, et une position de repos dans laquelle ledit moyen supplémentaire de blocage (9) libère ledit pêne (7) lorsque ledit verrou est en position de fonctionnement.

8. Dispositif antivol selon la revendication 7, **caractérisé en ce que** ledit moyen supplémentaire de blocage (9) comprend un levier (19) pivotant présentant une première extrémité (21) en contact avec ledit moyen de commande (8) et une deuxième extrémité opposée (23) configurée pour s'opposer au déplacement dudit pêne (7).

9. Dispositif antivol selon la revendication 8, **caractérisé en ce que** ladite tirette (16) présente un évidement (20) dans lequel ledit levier (19) est monté mobile.

10. Dispositif antivol selon la revendication 3 prise en combinaison avec la revendication 9, **caractérisé en ce que** ledit élément déclencheur (39) s'étend au moins partiellement autour dudit levier (19).

11. Dispositif antivol selon la revendication 10, **caractérisé en ce que** ledit moyen de blocage (9) comporte un moyen de rappel en position active, et **en ce que** ledit moyen de rappel est interposé entre ledit levier (19) et ledit élément déclencheur (39) s'étendant au moins partiellement autour dudit levier (19).

12. Dispositif antivol selon l'une des revendications 4 ou 5 prise en combinaison avec la revendication 11, **caractérisé en ce que** ledit moyen de rappel est interposé entre ledit levier (19) et ladite saillie de protection (49).

13. Colonne de direction pour véhicule automobile, **caractérisée en ce qu'**elle comporte un dispositif antivol conforme à l'une quelconque des revendications précédentes.

## Patentansprüche

1. Diebstahlschutzvorrichtung für die Lenksäule eines Kraftfahrzeugs, wobei die Vorrichtung Folgendes umfasst:
- einen Sperrbolzen (7), der beweglich in Translation in der Vorrichtung zwischen einer Verriegelungsposition der Lenksäule und einer Freigabeposition der Säule montiert ist, und
- ein Schloss (5), das beweglich zwischen einer neutralen Position und einer Betriebsposition ist und einen Rotor und ein Mittel zur Steuerung (8) der Verschiebung des Sperrbolzens (7) aufweist, umfassend:
- einen Nocken (15), der fest mit dem Rotor verbunden ist, um die Verschiebung des Sperrbolzens (7) zu steuern, und
- ein Zugstück (16), das von dem Nocken (15) verschoben wird,
wobei die Diebstahlschutzvoruchtung außerdem eine Vorrichtung zum Schutz des Zugstücks (16) umfasst, die sich mindestens teilweise um das Zugstück (16) erstreckt, und mindestens ein Mittel zur Blockierung (37) des Sperrbolzens (7), **dadurch gekennzeichnet, dass** die Schutzvorrichtung konfiguriert ist, um das mindestens eine Blockierungsmittel (37) im Fall einer Betätigung der Schutzvorrichtung, wenn die Schutzvorrichtung verformt wird, auszulösen.

2. Diebstahlschutzvomichtung nach Anspruch 1, **dadurch gekennzeichnet, dass** das mindestens eine Mittel zur Blockierung (37) des Sperrbolzens (7) ein Auslöseelement (39) umfasst, das mit dem Stator (13) des Schlosses (5) fest verbunden ist, ein Blockierungselement (41), das mit dem Auslöseelement (39) verbunden ist, und ein Rückholmittel (43), das konfiguriert ist, um das Blockierungselement (41) in eine aktive Position der Blockierung des Sperrbolzens (7) zu spannen, wenn das Auslösemittel (39) aktiviert ist, und dadurch, dass das Auslösemittel (39) den Schutzschirm des Zugstücks (16) bildet.

3. Diebstahlschutzvorrichtung nach Anspruch 2, **dadurch gekennzeichnet, dass** sich das Auslöseelement (39) mindestens teilweise um das Zugstück (16) erstreckt.

4. Diebstahlschutzvorrichtung nach einem der Ansprüche 2 oder 3, **dadurch gekennzeichnet, dass** das Auslöseelement (39) in Form eines Auslöseschafts hergestellt ist, der einerseits mit dem Stator (13) und andererseits mit dem Blockierungselement (41) verbunden ist, und wobei der Schaft einen Schutzvorsprung (49) aufweist, der sich mindestens teilweise um das Zugstück (16) erstreckt.

5. Diebstahlschutzvorrichtung nach Anspruch 4, **dadurch gekennzeichnet, dass** der Schutzvorsprung (49) einen Querschnitt aufweist, der im Wesentlichen ein "L" darstellt.

6. Diebstahlschutzvorrichtung nach einem der Ansprüche 4 oder 5, **dadurch gekennzeichnet, dass** das Blockierungselement (41) mindestens ein Führungsmittel (47) aufweist, das mit dem Auslöseelement (39) zusammenarbeitet, so dass das Führungsmittel (47) konfiguriert ist, um das Auslöseelement (39) zu führen zwischen:
- einer ersten Position, in der das Auslöseelement (39) das Blockierungselement (41) eingreift, um es in der Ruheposition zu halten, und
- einer zweiten Position, in der das Auslöseelement (39) das Blockierungselement (41) freigibt, das von dem Rückholmittel (43) des Blockierungsmittels (37) in die aktive Position der Blockierung des Sperrbolzens (7) gespannt ist.

7. Diebstahlschutzvorrichtung nach einem der vorhergehenden Ansprüche, **dadurch gekennzeichnet, dass** sie außerdem ein zusätzliches Mittel zur Blockierung (9) in Translation des Sperrbolzens (7) umfasst, das von dem Steuermittel (8) zwischen einer aktiven Position, in der das zusätzliche Blockierungsmittel (9) den Sperrbolzen (7) in Translation blockiert, um den Sperrbolzen (7) in der Verriegelungsposition zu halten, wenn sich das Schloss (5) in einer neutralen Position befindet, und einer Ruheposition gesteuert wird, in der das zusätzliche Blockierungsmittel (9) den Sperrbolzen (7) freisetzt, wenn sich das Schloss in der Betriebsposition befindet.

8. Diebstahlschutzvorrichtung nach Anspruch 7, **dadurch gekennzeichnet, dass** das zusätzliche Blockierungsmittel (9) einen drehenden Hebel (19) umfasst, der ein erstes Ende (21) aufweist, das mit dem Steuermittel (8) in Kontakt steht, und ein zweites, gegenüber liegendes Ende (23), das konfiguriert ist, um sich der Verschiebung des Sperrbolzens (7) zu widersetzen.

9. Diebstahlschutzvorrichtung nach Anspruch 8, **dadurch gekennzeichnet, dass** das Zugstück (16) eine Aussparung (20) aufweist, in der der Hebel (19) beweglich montiert ist.

10. Diebstahlschutzvorrichtung nach Anspruch 3 in Kombination mit Anspruch 9, **dadurch gekennzeichnet, dass** sich das Auslöseelement (39) mindestens teilweise um den Hebel (19) erstreckt.

11. Diebstahlschutzvorrichtung nach Anspruch 10, **dadurch gekennzeichnet, dass** das Blockierungsmittel (9) ein Rückholmittel in der aktiven Position umfasst, und dadurch, dass das Rückholmittel zwischen dem Hebel (19) und dem Auslöseelement (39) angeordnet ist, das sich mindestens teilweise um den Hebel (19) erstreckt.

12. Diebstahlschutzvorrichtung nach Anspruch 4 oder 5 in Kombination mit Anspruch 11, **dadurch gekennzeichnet, dass** das Rückholmittel zwischen dem Hebel (19) und dem Schutzvorsprung (49) angeordnet ist.

13. Lenksäule eines Kraftfahrzeugs, **dadurch gekennzeichnet, dass** sie eine Diebstahlschutzvorrichtung nach einem der vorhergehenden Ansprüche umfasst.

## Claims

1. Antitheft device for a steering column of a motor vehicle, said device comprising:
- a bolt (7) mounted translatably movable in said device between a position for locking the steering column and a position for releasing said column, and
- a latch (5) which is movable between a neutral position and an operating position, and which comprises a rotor and a means for controlling the movement (8) of said bolt (7) comprising:
- a cam (15) rigidly connected to said rotor in order to control the movement of said bolt (7), and
- a pull-bar (16) controlled in movement by said cam (15),
said antitheft device further comprises a device for protecting said pull-bar (16) which extends at least partially around said pull-bar (16) and at least one means for blocking (37) said bolt (7), **characterised in that** said device for protecting is configured to trigger said at least one means of blocking (37) in the event of the actuating of said device for protecting when said device for protecting is subjected to a deformation.

2. Antitheft device according to claim 1, **characterised in that** said at least one means for blocking (37) said bolt (7) comprises a triggering element (39) rigidly connected to the stator (13) of said latch (5), a blocking element (41) connected to said triggering element (39) and a means of return (43) configured to urge said blocking element (41) to an active blocking position of said bolt (7) when said triggering element (39) is activated, and **in that** said triggering element (39) forms a protective screen of said pull-bar (16).

3. Antitheft device according to claim 2, **characterised in that** said triggering element (39) extends at least partially around said pull-bar (16).

4. Antitheft device according to one of claims 2 or 3, **characterised in that** said triggering element (39) is carried out in the form of a triggering rod connected on the one hand to the stator (13) and on the other hand to said blocking element (41), and said rod having a protective projection (49) which extends at least partially around said pull-bar (16).

5. Antitheft device according to claim 4, **characterised in that** said protective projection (49) has a substantially "L"-shaped cross-section.

6. Antitheft device according to one of claims 4 or 5, **characterised in that** said blocking element (41) has at least one means for guiding (47) cooperating with said triggering element (39), in such a way that said means for guiding (47) is configured to guide said triggering element (39) between:
- a first position wherein said triggering element (39) engage said blocking element (41) in order to maintain it in idle position, and
- a second position wherein said triggering element (39) releases said blocking element (41) which is urged by said means of return (43) of said means for blocking (37), to an active blocking position of said bolt (7).

7. Antitheft device as claimed in any preceding claim, **characterised in that** it further comprises an additional means of blocking (9) in translation of said bolt (7) controlled by said means for controlling (8) between an active position wherein said additional means for blocking (9) blocks said bolt (7) in translation in such a way as to maintain said bolt (7) in locked position when said latch (5) is in neutral position, and an idle position wherein said additional means for blocking (9) releases said bolt (7) when said latch is in operating position.

8. Antitheft device according to claim 7, **characterised in that** said additional means for blocking (9) comprises a pivoting lever (19) that has a first end (21) in contact with said means for controlling (8) and a second opposite end (23) configured to oppose the movement of said bolt (7).

9. Antitheft device according to claim 8, **characterised in that** said pull-bar (16) has a recess (20) wherein said lever (19) is mountable movable.

10. Antitheft device according to claim 3 taken in combination with claim 9, **characterised in that** said triggering element (39) extends at least partially around said lever (19).

11. Antitheft device according to claim 10, **characterised in that** said means for blocking (9) comprises a means of return to active position, and **in that** said means of return is interposed between said lever (19) and said triggering element (39) extending at least partially around said lever (19).

12. Antitheft device according to one of claims 4 or 5 taken in combination with claim 11, **characterised in that** said means of return is interposed between said lever (19) and said protective projection (49).

13. Steering column of a motor vehicle, **characterised in that** it comprises an antitheft device in accordance with any of the preceding claims.
